# FASCICULE DE BREVET EUROPEEN

(11) **EP 2 146 608 B1**
(45) Date de publication et mention de la délivrance du brevet: **12.10.2011**
(21) Numéro de dépôt: 08750977.4
(22) Date de dépôt: 23.04.2008
(51) Int. Cl.: A47J 31/06

(54) **DISPOSITIF ET PROCEDE DESTINE A VIDER DE LEUR MARC LES CAPSULES SPECIALES DE CAFE EN ALUMINIUM ET EN REDUIRE LEUR TAILLE**
VORRICHTUNG UND VERFAHREN ZUR ENTFERNUNG VON KAFFEESATZ AUS SPEZIELLEN KAFFEEKAPSELN AUS ALUMINIUM UND ZUR VERKLEINERUNG DIESER KAPSELN
DEVICE AND METHOD FOR REMOVING COFFEE GROUNDS FROM SPECIAL COFFEE CAPSULES MADE OF ALUMINIUM AND FOR REDUCING THE SIZE OF SAID CAPSULES

(30) Priorité: 14.05.2007 FR 0703456
(43) Date de publication de la demande: 27.01.2010
(73) Titulaire: Franssen, Guy-Jacques-Marie, 4900 Spa (BE)
(72) Inventeur: Franssen, Guy-Jacques-Marie, 4900 Spa (BE)
(86) Numéro de dépôt international: PCT/IB2008/001240
(87) Numéro de publication internationale: WO 2008/139322

(56) Documents cités:
- WO-A-2007/016977

## Description

La présente invention concerne un dispositif destiné à vider de leur marc les capsules spéciales de café en aluminium et en réduire leur taille.

Le dispositif est intégré dans les machines expresso utilisant les capsules rigides en aluminium.

A ce jour, les capsules usagées(1) sont jetées dans les poubelles normales, l'aluminium ne peut être recyclé et est donc perdu.

Le dispositif permet, dans un premier temps, de retourner les capsules afin de les vider dans un réservoir à marc(5) et ensuite les comprimer pour en reduire l'encombrement.

Les capsules vidées et réduites(17) sont récupérées dans un second réservoir(6).

Après plusieurs utilisations, le marc peut être jeté dans la poubelle normale et l'aluminium dans la poubelle à recycler.

Le dispositif comprend un piston de vidange(2), un piston de déplacement latéral(3), d'un piston d'écrasement(4),et de deux récipients de récupération (5),(6). L'ensemble de ces éléments est intégré dans le corps de la machine à café(10).

Une modification des éléments existants de la machine doit être opérée pour combiner le dispositif à celle-ci.

Le bec d'écoulement du café(11) doit être allongé et le corps(10) avant de la machine doit être agrandi pour intégrer le dispositif de l'invention.

Le récipient de récupération actuellement situé sous le bec d'écoulement(11) est remplacé par un réservoir récolteurs de marre(5) à gauche et de capsules à droite(6).

Le dispositif de l'invention se situe sous le mécanisme de fabrication du café(12).

Après écoulement du café, ce dispositif entre en action.

Par l'ouverture de la poignée(7), la capsule usagée(1) est libérée du mécanisme de fabrication du café(12) et descend de quelques centimètres laissant l'accès à une capsule neuve.

La collerette(14) de la capsule usagée(1) coulisse dans les rainures d'éjection(13). Ces rainures(13) obligent la capsule(1) à se positionner face au piston de vidange(2).

Le piston de vidange(2) est positionné sous le mécanisme de fabrication(12) de manière à recevoir la capsule usagée(1).

Par la fermeture de la poignée(7) pour une nouvelle utilisation, la partie de ce dernier(2) rentre en contact avec la capsule usagée(1). Ce piston(2) est de forme inverse de celle-ci(1) de manière à pouvoir retourner le pourtour et défoncer la fine paroi perforée à l'utilisation et ainsi la vider du marc dans le récipient(5) prévu à cet effet.

Par un système de levier(8), le maniement de la poignée(7) commande le mouvement du piston de vidange(2).

La course de celui-ci est du double de la course du mécanisme de fabrication du café(12).

Par l'ouverture de la poignée(7), le piston de vidange(2) ressort de la capsule retournée(15)et la libère. Le piston de déplacement(3), commandé par le retour du piston de vidange(2),actionné par un levier et ressort(18), rentre en contact avec celle-ci(1) pour diriger la capsule latéralement de quelques centimètres vers la droite tout en conservant dans le même plan. Ce piston de déplacement(3) a une faible épaisseur pour agir uniquement sur la collerette(14) de la capsule(1). Il est en matière flexible et coulisse dans une gorge comprenant une courbe de 90°. Sa course est suffisamment longue pour obtenir le déplacement souhaité..

La capsule(1) s'immobilise face au piston d'écrasement(4). Les rainures(13) ainsi que l'espace d'évacuation(16)sont étudiées de manière à empêcher la capsule(15) de descendre dans le récipient de récupération des capsules avant d'être réduite en épaisseur par le piston d'écrasement(4).

Par la fermeture de la poignée(7), Le mouvement du piston d'écrasement(4) est actionné vers l'arrière par l'intermédiaire de levier(9) de manière à comprimer la partie repoussée de la capsule pour l'aplatir.

La course de celui-ci est de sens contraire au piston de fabrication du café(12).

A l'ouverture de la poignée(7), le piston d'écrasement(4) s'écarte et laisse tomber la capsule(17) dans le récipient prévu à cet effet.

Par l'ouverture et la fermeture de la poignée(7), les capsules se succèdent dans le système. Il faudra donc trois fermetures et ouvertures pour vider complètement le dispositif.

Une amélioration de l'invention peut être amenée par une modification du corps de la machine à café(10).

Une face avant amovible pivotante(19) permet aisément nettoyage du système. Une vis de blocage(20) maintien la face en position fermée lors de l'utilisation.

Un moteur(21)entraînant le piston de vidange modifié(22), peut également être ajouté pour faciliter le maniement de la poignée.

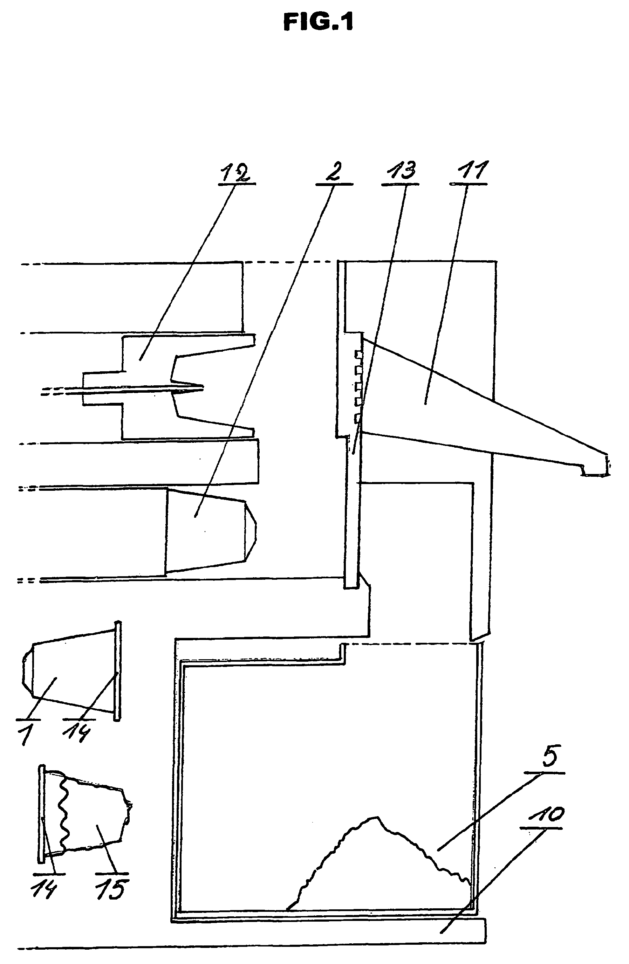

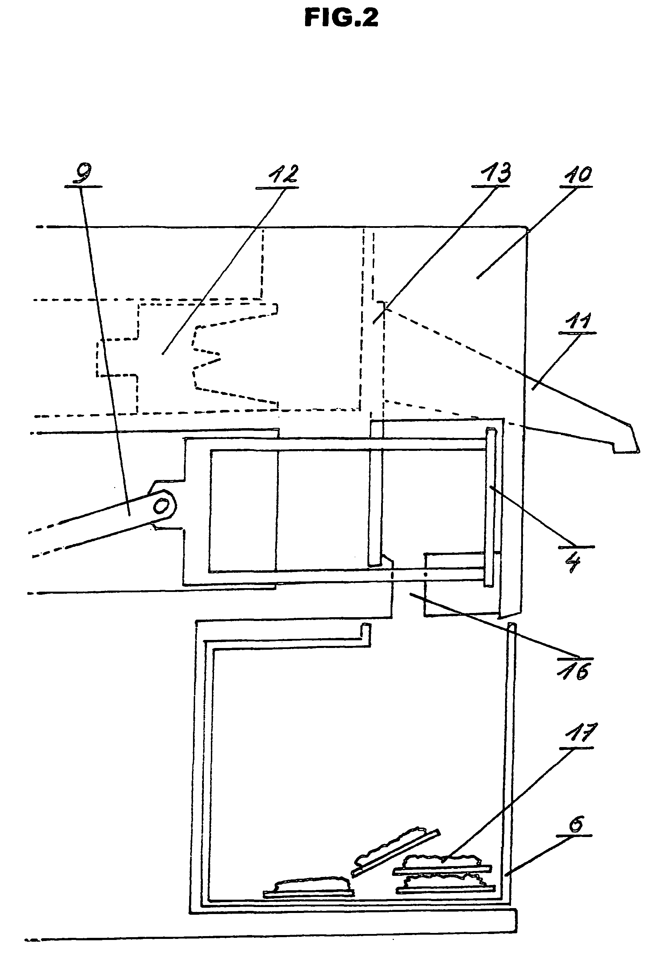

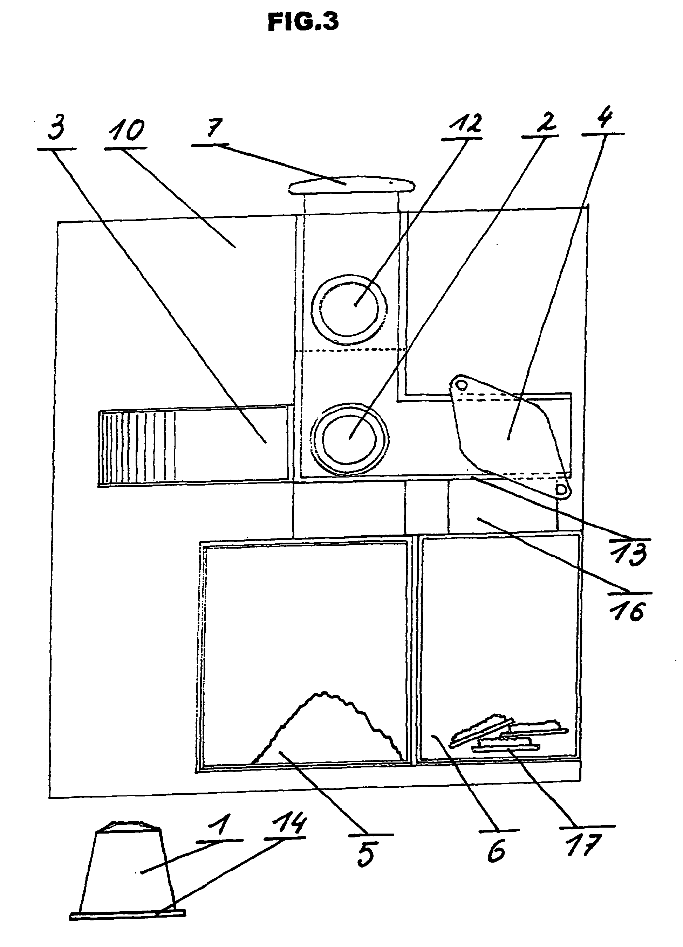

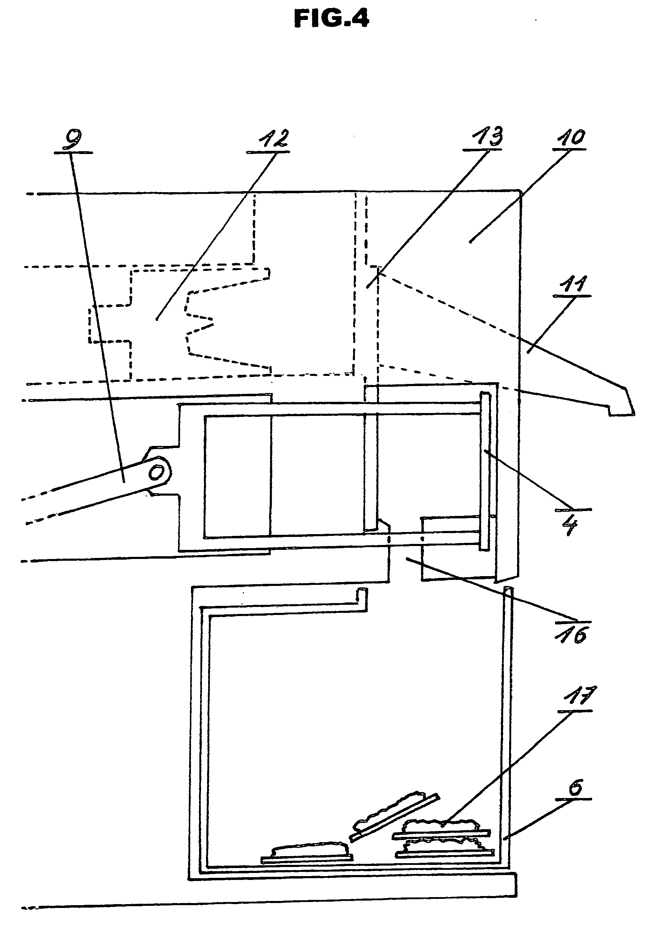

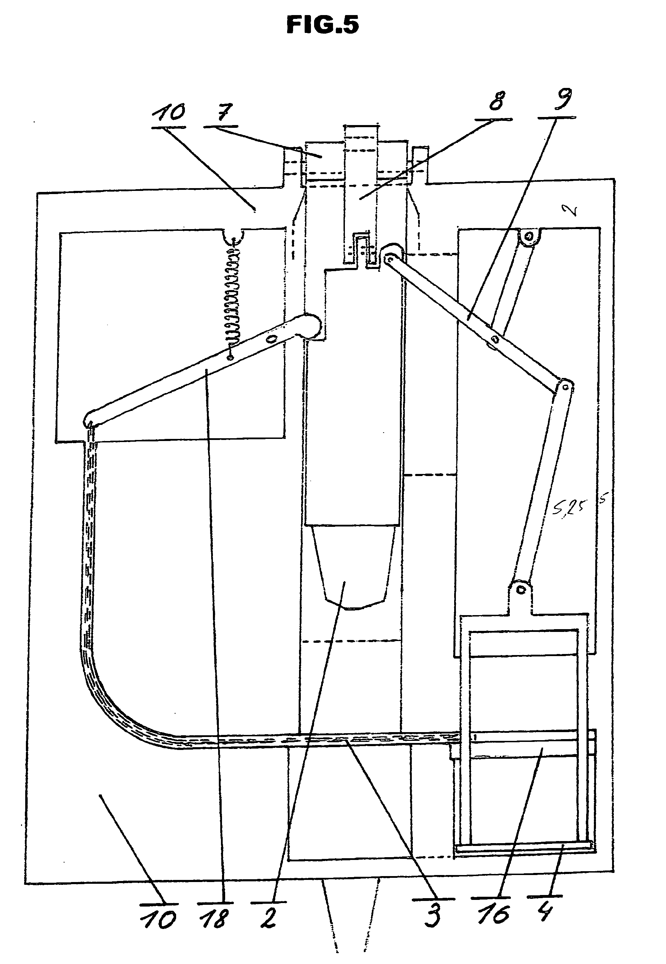

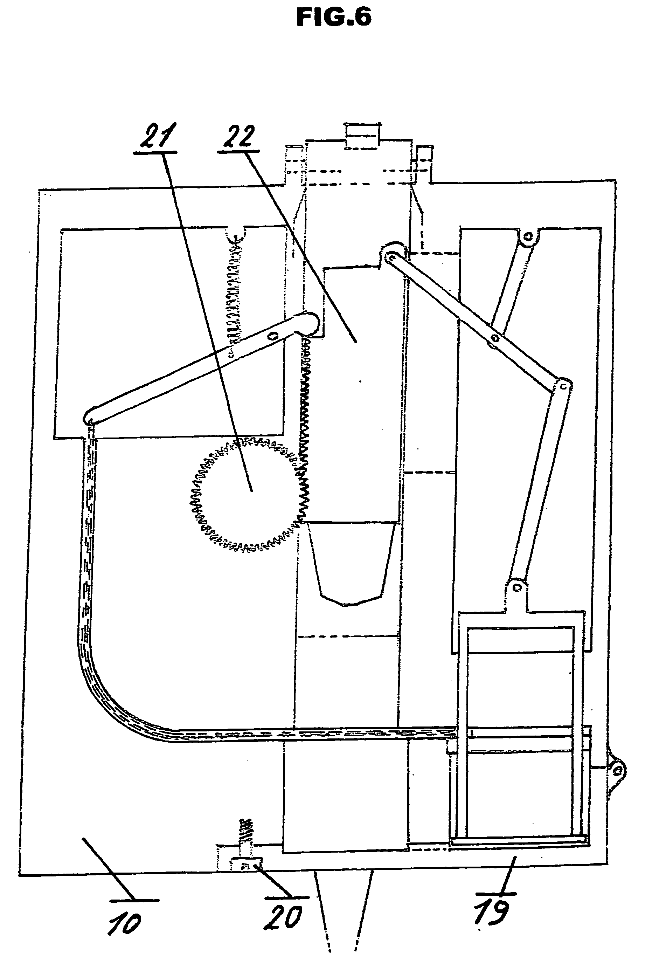

## Revendications

1. Dispositif intégré dans une machine expresso destiné à vider de leur marc les capsules spéciales de café en aluminium et en réduire leur taille, **caractérisé en ce qu'**il comporte un piston de vidange (2) destiné à emboutir les capsules usagées (1) pour en vider le contenu dans un récipient (5), un piston de déplacement latéral (3) les orientant vers un piston d'écrasement (4) destiné à réduire leur épaisseur et un deuxième récipient de récupération (6) pour les capsules écrasées (17).

2. Dispositif selon la revendication 1 **caractérisé par** l'utilisation d'un moteur pour actionner les pistons lors de l'utilisation du système.

3. Dispositif selon toutes les revendications **caractérisé en ce que** le dispositif possède une face avant démontable pour permettre l'entretien.

4. Procédé de vidange de leur marc des capsules de café en aluminium et de réduction de leur taille, utilisant un dispositif conforme à l'une des revendications précédentes, **caractérisé en ce qu'**il comporte les étapes suivantes: la séparation du marc de la capsule par l'emboutissage du pourtour de celle-ci provoquant le défoncement de la paroi fine, le déplacement latéral de la capsule vidée et la réduction de son épaisseur par écrasement.

## Claims

1. A device integrated into an espresso machine designed to empty coffee grounds from special coffee capsules made of aluminum and to reduce their size, **characterized in that** it comprises a discharge piston (2) designed to stamp used capsules (1) in order to empty their contents into a receptacle (5), a lateral displacement piston (3) orienting them toward a crushing piston (4) designed to reduce their thickness and a second recuperation receptacle (6) for the crushed capsules (17).

2. A device according to claim 1 **characterized by** the use of a motor to actuate the pistons during the use of the system.

3. A device according to all of the claims **characterized in that** the device has a removable front face to enable maintenance.

4. A method of emptying coffee grounds from coffee capsules made of aluminum and reduction of their size, using a device according to one of the preceding claims, **characterized in that** it comprises the following steps: separation of the coffee grounds from the capsule by stamping the contour of it causing the breakup of the thin wall, the lateral displacement of the emptied capsule and the reduction of its thickness by crushing.

## Patentansprüche

1. In einer Espresso-Maschine integrierte Vorrichtung zwecks Entfernung des Kaffeesatzes aus den speziellen Kaffeekapseln aus Aluminium und um deren Größe zu reduzieren, **gekennzeichnet dadurch, dass** sie einen Entleerungskolben (2) umfasst der dazu dient die gebrauchten Kapseln (1) zu pressen um deren Inhalt in einen Behälter (5) zu leeren, einen seitlich sich bewegenden Kolben (3) der sie zu einem Zerdrückerkolben (4) führt um ihre Dicke zu reduzieren und einen zweiten Auffangbehälter (6) zwecks Aufnahme der zerdrückten Kapseln (17).

2. Vorrichtung entsprechend der Forderung 1, **gekennzeichnet durch** die Verwendung eines Motors um die Kolben während der Anwendung des Systems in Bewegung zu setzen.

3. Vorrichtung entsprechend aller Forderungen, **gekennzeichnet dadurch, dass** die Vorrichtung eine abnehmbare Vorderseite umfasst, um den Unterhalt zu ermöglichen.

4. Verfahren der Entleerung des Kaffeesatzes aus den Kaffeekapseln aus Aluminium und der Reduzierung ihrer Größe unter Verwendung einer Vorrichtung entsprechend einer der vorstehenden Forderungen, **gekennzeichnet durch** folgende Etappen: die Trennung des Kaffeesatzes von der Kapsel **durch** das Pressen der Wandung derselben wodurch sich die dünne Wandung eindrückt, die entleerte Kapsel sich seitlich bewegt und ihre Dicke sich **durch** Zerdrücken reduziert.
